# EUROPEAN PATENT SPECIFICATION

(11) **EP 3 009 613 B1**
(45) Date of publication and mention of the grant of the patent: **30.01.2019**
(21) Application number: 15178341.2
(22) Date of filing: 24.07.2015
(51) Int. Cl.: F01D 11/04, F01D 11/00

(54) **CONTACTLESS SEALS FOR GAS TURBINE ENGINES**
KONTAKTLOSE DICHTUNGEN FÜR GASTURBINENMOTOREN
JOINTS SANS CONTACT POUR MOTEURS À TURBINE À GAZ

(30) Priority: 19.08.2014 US 201462039334 P
(43) Date of publication of application: 20.04.2016
(73) Proprietor: United Technologies Corporation, Farmington, CT 06032 (US)
(72) Inventor: ALVANOS, Ioannis, West Springfield, MA 01089 (US)
(74) Representative: Dehns

(56) References cited:
- EP-A1- 2 613 006
- EP-A2- 0 926 315
- EP-B1- 2 009 248
- JP-A- S58 152 975
- US-A1- 2005 214 112
- US-A1- 2010 008 760
- US-A1- 2011 193 293
- US-A1- 2013 170 983
- US-B1- 8 038 399

## Description

### BACKGROUND OF THE INVENTION

### 1. Field of the Invention

The present disclosure relates to gas turbine engines, and more particularly sealing between rotating and static gas turbine engine components.

### 2. Description of Related Art

Gas turbine engines generally include rotor portions, stator portions, and cavities in fluid communication with pressure differentials therebetween. Seals typically restrict fluid flow between cavities in fluid communication with one another to limit undesired fluid communication between the cavities. One type of a seal is a contactless seal. Contactless seals generally include rotating and static structures in proximity to one another separated by a gap. The proximity of the structures typically causes fluid traversing the gap to swirl immediately adjacent the gap on the low-pressure side of the seal structures. The swirl forms a localized region of high-pressure between the rotor and stator portions that discourages fluid from traversing the gap, thereby effecting sealing between the cavities.

One challenge to contactless seals is maintaining effective sealing. Generally, sealing effectiveness is a function of the gap size, i.e. the minimum distance between the stator and rotor portions. However, since engine parts can expand and contract over the engine operating cycle, there are limits to how small the gap size can be in a given engine as well as how effectively the gap size can be mechanically controlled.

Documents US 2011/0193293 A1, US 8038399 B1, US 2010/0008760 A1 and EP 0926315 A2 all relate to sealing arrangements that are suitable for use in gas turbine engines, all of which disclose arcuate impingement surfaces. US 2013/170983 A1, US 2005/214112 A1 and EP 2009248 B1 disclose further sealing arrangements.

Such conventional methods and systems have generally been considered satisfactory for their intended purpose. However, there is still a need in the art for improved seals. The present disclosure provides a solution for this need.

### SUMMARY OF THE INVENTION

According to the invention, there is provided a seal, comprising: a first seal structure; a second seal structure separated from the first seal structure by a gap; and an injector with an outlet extending from the first seal structure into the gap, wherein the outlet is in fluid communication with a fluid source for issuing fluid against the second seal structure for magnifying a vortex formed within the gap by fluid traversing the gap, wherein the second seal structure defines an impingement area with a planar surface opposite the outlet of the injector; characterised in that the first seal structure is connected to a rotor portion of a gas turbine engine, the first seal structure being defined by a disk cover connected to the rotor portion of the gas turbine engine; in that the injector outlet is communicative with a cavity disposed on a side of the disk cover opposite the gap; and in that the injector defines a linear channel extending between an inlet and the outlet of the channel, the linear channel defining a substantially uniform flow area along a length of the channel between the inlet and the outlet of the channel.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below by way of example only, and with reference to certain figures, wherein:
Fig. 1 is a schematic, partially cross-sectional side elevation view of an exemplary embodiment of a gas turbine engine constructed in accordance with the present disclosure, showing a rotor;
Fig. 2 is a cross-sectional side elevation view of the gas turbine engine of Fig. 1, showing embodiments of seals arranged between cavities with differential pressures; and
Fig. 3 is cross-sectional side elevation of an embodiment of the seals shown in Fig. 2, showing a flow discouraging seal oriented toward a forward end of a gas turbine engine and forming a fluid curtain between adjacent cavities.

### DETAILED DESCRIPTION OF THE PREFERRED EMBODIMENTS

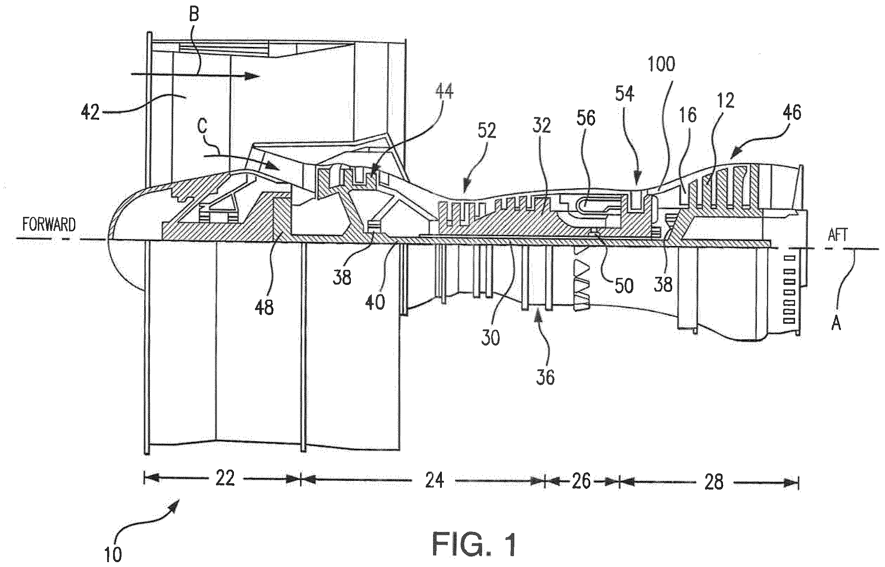

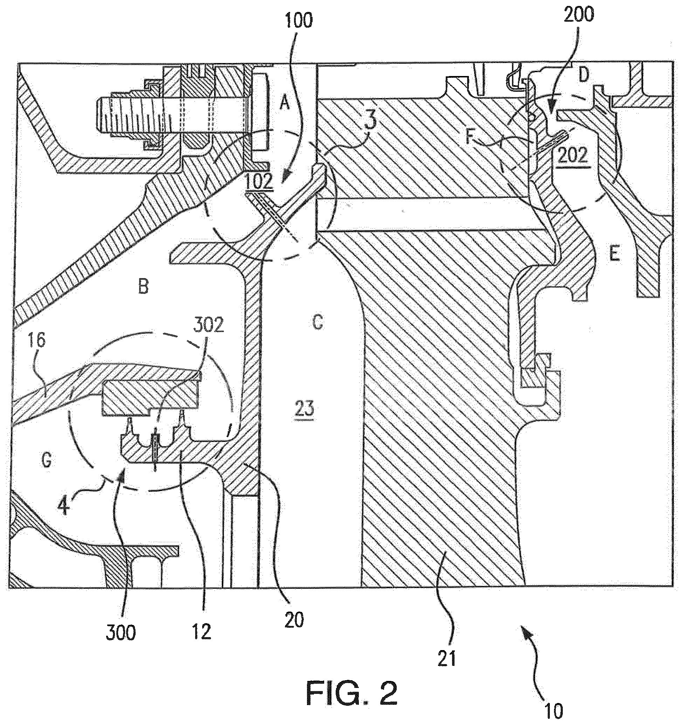

Reference will now be made to the drawings wherein like reference numerals identify similar structural features or aspects of the subject disclosure. For purposes of explanation and illustration, and not limitation, a partial view of an exemplary embodiment of a gas turbine engine with a seal in accordance with the disclosure is shown in Fig. 1 and is designated generally by reference character 10. Other embodiments of seals in accordance with the disclosure, or aspects thereof, are provided in Figs. 2-3, as will be described. The systems and methods described herein can be used in aircraft main engines and auxiliary engines.

With reference to Fig. 1, gas turbine engine 10 is schematically shown. As described herein, gas turbine engine 10 is a two-spool turbofan engine that generally incorporates a fan section 22, a compressor section 24, a combustor section 26 and a turbine section 28. Alternative engines might include an augmentor section (not shown) among other systems or features. Fan section 22 drives air along a bypass flow path B. Compressor section 24 drives air along a core flow path C for compression and communication into combustor section 26 and subsequent expansion through turbine section 28. Although depicted as a turbofan gas turbine engine, it is to be understood and appreciated that the concepts described herein are not limited to use with turbofans as the teachings may be applied to other types of turbine engines, such as three-spool gas turbine engine architectures.

Gas turbine engine 10 generally includes a rotor portion 12 separated from a stator portion 16 by a gap 102 (shown in Fig. 2) with a seal 100 extending between rotor portion 12 and stator portion 16. Rotor portion 12 and stator portion 16 are divided into a low-speed spool 30 and a high-speed spool 32 mounted for rotation about an engine central longitudinal axis A relative to an engine static structure 36 via several bearing systems 38. It should be understood that various bearing systems 38 at various locations may alternatively or additionally be provided.

Low-speed spool 30 generally includes an inner shaft 40 that interconnects a fan 42, a low-pressure compressor 44 and a low-pressure turbine 46. Inner shaft 40 may be connected to fan 42 directly or through a geared architecture 48 to drive fan 42 at a rotation speed lower than a rotation speed of low-speed spool 30, such as with a gear reduction ratio of, for example, about at least 2.3:1. High-speed spool 32 includes an outer shaft 50 that interconnects a high-pressure compressor 52 and high-pressure turbine 54. Combustor section 26 includes a combustor 56 arranged between high-pressure compressor 52 and high-pressure turbine 54. Inner shaft 40 and outer shaft 50 are concentric and configured for rotation about engine central longitudinal axis A which is collinear with respective longitudinal axes of inner shaft 40 and outer shaft 50.

Core airflow C is compressed by low-pressure compressor 44 and communicated to high-pressure compressor 52. High-pressure compressor 52 further compresses core airflow C and communicates core airflow C to combustor section 26. Fuel is added to core airflow C and the mixture ignited in combustor 56, core airflow C thereby undergoing further pressurization and forming combustion products. Combustor 56 communicates the combustion products forming core airflow C into high-pressure turbine 54 and low-pressure turbine 46. High-pressure turbine 54 and low-pressure turbine 46 successively expand the combustion products forming core airflow C, extract work therefrom, and rotationally drive low-speed spool 30 and high-speed spool 32. Low-speed spool 30 and high-speed spool 32 in turn rotate fan 42. Rotation of fan 42 generates bypass airflow B and provides thrust.

Gas turbine engine 10 is typically assembled in build groups or modules that form a rotor portion 12 and a stator portion 16. Stator portion 16 is separated from rotor portion 12 by at least one contactless seal, a first seal 100, second seal 200 and third seal 300 being identified in Fig. 1 for purposes of illustration and not limitation. In the illustrated embodiment, low-pressure compressor 44 includes three stages, high-pressure compressor 52 includes eight stages, high-pressure turbine 54 includes two stages, and low-pressure turbine includes five stages, respectively, stacked in an axial arrangement. It should be appreciated, however, that any number of stages will benefit herefrom. Further, other gas turbine architectures such as three-spool architecture with an intermediate spool will also benefit herefrom as well.

With reference to Fig. 2, a cross-sectional side elevation of gas turbine engine 10 is shown including first seal 100, second seal 200, and third seal 300. Rotor portion 12 and stator portion 16 define a plurality of pressurized cavities within the interior of gas turbine engine 10 (shown in Fig. 1). These pressurized cavities are physically connected by passageways that are bounded by seals. Controlling fluid flow through the passageways using the seals can have an advantageous effect on engine performance and/or reliability.

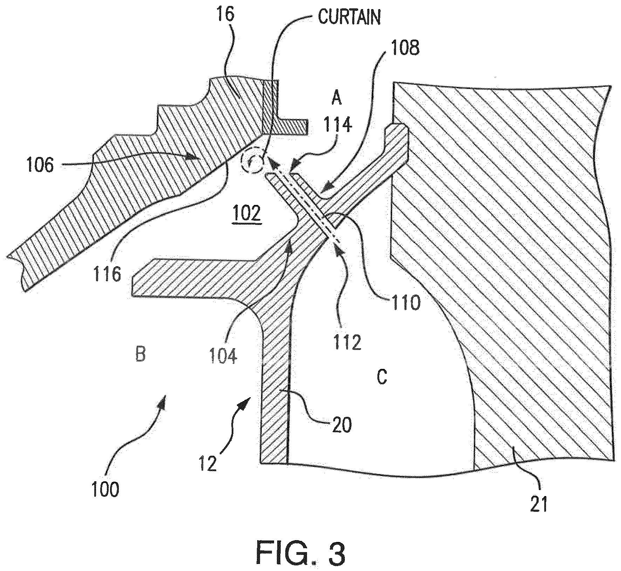

First seal 100 is arranged across a passageway 102 extending between a first cavity A and a second cavity B, and is in fluid communication with a third cavity C. First cavity A has a pressure that is less than second cavity B. Third cavity C has a pressure that is greater than both second cavity B and first cavity A. First seal 100 is configured and adapted to issue fluid into passageway 102 between first cavity A and second cavity B, thereby limiting fluid flow from first cavity A to second cavity B. This magnifies a vortex (shown in Fig. 3) formed by fluid traversing passageway 102, potentially improving sealing between cavities in fluid communication with one another through passageway 102.

Second seal 200 is arranged across a passageway 202 extending between a fourth cavity D and a fifth cavity E and is in fluid communication with a sixth cavity F. Fourth cavity D has a pressure that is less than fifth cavity E. Sixth cavity F has a pressure that is greater than both fourth cavity D and that is less than fifth cavity E. Second seal 200 is configured and adapted for issuing fluid from cavity F into passageway 202 between fourth cavity D and fifth cavity E, thereby limiting fluid flow from fifth cavity E into fourth cavity D. This magnifies a vortex formed by fluid traversing passageway 202, potentially improving sealing between cavities in fluid communication with one another through passageway 202.

Third seal 300 is arranged across a passageway 302 extending between second cavity B and a seventh cavity G. Seventh cavity G has a higher pressure than second cavity B. Third seal 300 is configured and adapted such that fluid from seventh cavity G preferentially enters passageway 302 through third seal 300. This magnifies vortices (shown in Fig. 4) formed by fluid traversing passageway 302 and forms an additional vortex (shown in Fig. 4) within passageway 302, potentially improving sealing between cavities in fluid communication with one another through passageway 302.

With reference to Fig. 3, first seal 100 is shown. First seal 100 is a contactless, flow discouraging seal arranged between rotor portion 12 and stator portion 16. First seal 100 includes a first seal structure 104 and a second seal structure 106 that bound opposing sides of passageway 102. Passageway 102 in turn forms a gap separating rotor portion 12 from stator portion 16. Rotor portion 12 includes a disk cover 20 connected to a rotor disk 21, disk cover 20 defining first seal structure 104. Stator portion 16 defines second seal structure 106.

First seal structure 104 includes an injector 108 and is defined by rotor portion 12. As illustrated, injector 108 is defined by disk cover 20. Injector 108 in turn defines an internal channel 110 having an inlet 112 and an outlet 114 with a flow area. Channel 110 is a substantially linear channel with a uniform flow area along the length of channel 110. Channel 110 extends from third cavity C to passageway 102 and places third cavity C in fluid communication with passageway 102 through channel 110.

Outlet 114 is oriented toward a forward end of gas turbine engine 10 (shown in Fig. 1) such that fluid issuing from outlet 114 flows from outlet 114 in a direction opposing the generally flow of working fluid through gas turbine engine 10 and against second seal structure 106 opposite first seal structure 102. As illustrated, outlet 114 is communicative with third cavity C, third cavity C being disposed on a side of disk cover 20 opposite passageway 102.

Second seal structure 106 includes a surface with an impingement area 116 arranged on stator portion 16 that is substantially planar and is configured and adapted to magnify a vortex formed by fluid traversing passageway 102. This increases resistance of the high-pressure vortex formed on the downstream side of passageway 102, improving the effectiveness of the vortex as a barrier to fluid traversing passageway 102. As illustrated, impingement area 116 is substantially orthogonal to channel 110. It is contemplated that impingement area 116 can be angled with respect to channel 110 so as to position or size the swirl region on a desired side of the axis of channel 110 as suitable for a given application.

The methods and systems of the present disclosure, as described above and shown in the drawings, provide for gas turbine engine seals with superior properties including improved sealing across engine cavities having pressure differentials. While the apparatus and methods of the subject disclosure have been shown and described with reference to preferred embodiments, those skilled in the art will readily appreciate that changes and/or modifications may be made thereto without departing from the scope of the subject disclosure. For example, injectors included in the first seal structure can be oriented in the direction of rotation of the rotor portion. Alternatively, the injectors can be oriented in a direction opposite the direction of rotation of the rotor portion.

## Claims

1. A seal (100), comprising:
a first seal structure (104);
a second seal structure (106) separated from the first seal structure by a gap (102); and
an injector (108) with an outlet (114) extending from the first seal structure into the gap, wherein the outlet is in fluid communication with a fluid source for issuing fluid against the second seal structure for magnifying a vortex formed within the gap by fluid traversing the gap,
wherein the second seal structure defines an impingement area (116) with a planar surface opposite the outlet of the injector;
**characterised in that** the first seal structure is connected to a rotor portion (12) of a gas turbine engine (10), the first seal structure being defined by a disk cover (20) connected to the rotor portion of the gas turbine engine;
**in that** the injector outlet is communicative with a cavity (C) disposed on a side of the disk cover opposite the gap; and
**in that** the injector defines a linear channel extending between an inlet (112) and the outlet of the channel, the linear channel defining a substantially uniform flow area along a length of the channel between the inlet and the outlet of the channel.

2. A seal as recited in claim 1, wherein the injector is arranged within a flow discouraging seal separating a rotor portion (12) from a stator portion (16).

3. A seal as recited in claim 1 or 2, wherein the fluid outlet is oriented one of (a) toward a forward end of a gas turbine engine (10), (b) toward an aft end of a gas turbine engine (10), (c) in a direction of rotation of a gas turbine engine rotor portion (12), or (d) in a direction opposite that of a direction of rotation of a gas turbine engine rotor portion (12).

## Patentansprüche

1. Dichtung (100), umfassend:
eine erste Dichtungsstruktur (104);
eine zweite Dichtungsstruktur (106), die von der ersten Dichtungsstruktur durch einen Spalt (102) getrennt ist; und
einen Injektor (108) mit einem Auslass (114), der sich von der ersten Dichtungsstruktur in den Spalt erstreckt, wobei der Auslass in Fluidverbindung mit einer Fluidquelle steht, um Fluid gegen die zweite Dichtungsstruktur auszustoßen, um einen innerhalb des Spaltes gebildeten Wirbel durch ein den Spalt durchquerendes Fluid zu vergrößern,
wobei die zweite Dichtungsstruktur einen Auftreffbereich (116) mit einer flachen Oberfläche gegenüber dem Auslass des Injektors definiert;
**dadurch gekennzeichnet, dass** die erste Dichtungsstruktur mit einem Rotorabschnitt (12) eines Gasturbinenmotors (10) verbunden ist, wobei die erste Dichtungsstruktur durch eine mit dem Rotorabschnitt des Gasturbinenmotors verbundene Scheibenabdeckung (20) definiert ist;
dass der Injektorauslass mit einem Hohlraum (C) in Verbindung steht, der sich an einer Seite der Scheibenabdeckung gegenüber dem Spalt befindet; und
dass der Injektor einen linearen Kanal definiert, der sich zwischen einem Einlass (112) und dem Auslass des Kanals erstreckt, wobei der lineare Kanal einen im Wesentlichen gleichförmigen Strömungsbereich entlang einer Länge des Kanals zwischen dem Einlass und dem Auslass des Kanals definiert.

2. Dichtung nach Anspruch 1, wobei der Injektor innerhalb einer einer Strömung entgegenwirkenden Dichtung, die einen Rotorabschnitt (12) von einem Statorabschnitt (16) trennt, angeordnet ist.

3. Dichtung nach Anspruch 1 oder 2, wobei der Fluidauslass gemäß einem von Folgendem ausgerichtet ist: (a) in Richtung eines vorderen Endes eines Gasturbinenmotors (10), (b) in Richtung eines hinteren Endes eines Gasturbinenmotors (10), (c) in einer Drehrichtung eines Gasturbinenmotorrotorabschnitts (12) oder (d) in einer Richtung entgegengesetzt zu der Drehrichtung eines Gasturbinenmotorrotorabschnitts (12).

## Revendications

1. Joint (100), comprenant :
une première structure de joint (104) ;
une seconde structure de joint (106) séparée de la première structure de joint par un espace (102) ; et
un injecteur (108) muni d'une sortie (114) s'étendant depuis la première structure de joint dans l'espace, dans lequel la sortie est en communication fluidique avec une source de fluide pour émettre du fluide contre la seconde structure de joint afin d'amplifier un tourbillon formé à l'intérieur de l'espace par le fluide traversant l'espace,
dans lequel la seconde structure de joint définit une zone de contact (116) avec une surface plane à l'opposé de la sortie de l'injecteur ;
**caractérisé en ce que** la première structure d'étanchéité est raccordée à une partie de rotor (12) d'un moteur à turbine à gaz (10), la première structure de joint étant définie par un couvercle de disque (20) raccordée à la partie de rotor du moteur à turbine à gaz ;
**en ce que** la sortie d'injecteur est en communication avec une cavité (C) disposée sur un côté du couvercle de disque à l'opposé de l'espace ; et
**en ce que** l'injecteur définit un canal linéaire s'étendant entre une entrée (112) et la sortie du canal, le canal linéaire définissant une zone de fuite sensiblement uniforme sur la longueur du canal entre l'entrée et la sortie du canal.

2. Joint selon la revendication 1, dans lequel l'injecteur est agencé à l'intérieur d'un joint de détournement de fuite séparant une partie de rotor (12) d'une partie de stator (16).

3. Joint selon la revendication 1 ou 2, dans lequel la sortie de fluide est orientée dans l'une des configurations suivantes : (a) vers une extrémité avant d'un moteur à turbine à gaz (10), (b) vers une extrémité arrière d'un moteur à turbine à gaz (10), (c) dans une direction de rotation d'une partie de rotor de moteur à turbine à gaz (12), ou (d) dans une direction opposée à une direction de rotation d'une partie de rotor de moteur à turbine à gaz (12).
